# EUROPÄISCHE PATENTSCHRIFT

(11) **EP 1 170 199 B1**
(45) Veröffentlichungstag und Bekanntmachung des Hinweises auf die Patenterteilung: **01.02.2006**
(21) Anmeldenummer: 00114708.1
(22) Anmeldetag: 08.07.2000
(51) Int. Cl.: B62D 53/06

(54) **Kombinierter Auflieger**
Combination semi-trailer
Semi-remorque combiné

(43) Veröffentlichungstag der Anmeldung: 09.01.2002
(73) Patentinhaber: DOLL FAHRZEUGBAU GMBH, D-77728 Oppenau (DE)
(72) Erfinder: Seidel, Dieter, 77731 Willstätt (DE); Gerhardt, Rolf, 77740 Bad Peterstal-Griesbach (DE)
(74) Vertreter: Ludewig, Rita

(56) Entgegenhaltungen:
- DE-A- 4 026 010
- DE-U- 29 719 229
- US-A- 3 645 559

## Beschreibung

Die Erfindung betrifft einen kombinierten Auflieger zum Transport schwerer Ladeobjekte wie Shredder, Baumaschinen, Krane Bagger, Raupen und dergleichen.

Es sind Tiefladeanhänger oder Tieflader bekannt, deren Ladefläche aus einer Plattform besteht, die auf dem mittleren, tiefgekröpften Teil eines Fahrgestellrahmens aufliegt oder in den Rahmenaufbau eingefügt ist. Bei diesen muß das Transportgut, beispielsweise Baumaschinen, Krane, Bagger, Raupen etc. über Rampen ausgefahren auf den Tieflader aufgefahren und mit speziellen Befestigungsmitteln wie Ketten fest verankert werden.

Es sind auch Satteltiefladeauflieger mit abnehmbarem Schwanenhals bekannt, deren Ladefläche endseitig mit einem Fahrgestell fest verbunden und bedarfsweise mit Auffahrhilfen und Hebewerken ausgestattet ist (siehe z. B. Prospekt der Firma Goldhofer für einen zwangsgelenkten Satteltiefladeanhänger von 1994). Diese gestatten das Auffahren einer mobilen Baumaschine sowie das Anheben des Ladegutes in die Ebene des Ladebetts oder das Aufladen des Transportgutes mit einem zusätzlichen Hebezeug. Zum Anhängen des beladenen Tiefladeanhängers an den Sattelschlepper wird ebenfalls ein zusätzliches Hebezeug mit schwerer Hydraulik benötigt.

Weiterhin kommen eine Vielzahl von Sonderfahrgestellen, insbesondere für nicht mobile Baumaschinen wie Krane besonders Tunndrehkrane (siehe z. B. Prospekt der Firma LIEBHERR für den Turmdrehkran 63 K von 1994) zum Einsatz. Diese Sonderfahrgestelle sind immer nur für ein Ladeobjekt ausgelegt und nicht für andere Transportgüter einsetzbar. Außerdem sind für jedes Sonderfahrgestell spezielle Anschlagmittel zur Verankerung des Transportobjekts mit dem Fahrgestell nötig.

Aus dem Gebrauchsmuster 296 13 764.2 ist auch ein kombinierter Auflieger zum Transport von Turmdrehkranen etc. bekannt, der durch einen auf einen Sattelschlepper aufsetzbaren Rahmenkopf und einem ein- oder mehrachsigen Hinterfahrgestell gekennzeichnet ist, die jeweils mit mindestens zwei höhenverstellbaren Aufnahmevorrichtungen und einer durchgehenden Plattformabdeckung und einem durchgehenden

Ladebett ausgestattet sind, wobei das Ladebett beidseitig mit mindestens zwei Aufnahmekonsolen oder Adaptern über die höhenverstellbaren Aufnahmevorrichtungen einerseits am Rahmenkopf und andererseits an dem Hinterfahrgestell fest oder steckbar angekoppelt ist und an Stelle des Ladebetts ein Ladeobjekt direkt fest oder steckbar ankoppelbar ist, das sich selbst trägt. Der Nachteil dieser Konstruktion besteht darin, daß die am Hinterfahrgestell und dem Rahmenkopf angeordneten höhenverstellbaren Aufnahmevorrichtungen zum Ankoppeln des Ladegutes oder eines Ladebetts nicht universell für die verschiedensten Ladeobjekte und Kupplungsvarianten einsetzbar sind.
Aus der gattungsgemäßen DE 297 19 229 U1 ist ein Sattelauflieger mit auskuppelbarem Lademodul bekannt. Die Erfindung betrifft einen Sattelauflieger mit einem Schwanenhals, einem Lademodul und einer Hinterachsbaugruppe zum Transport von Maschinen aller Art, insbesondere Baumaschinen. Aufgabe der Erfindung ist es, eine Sattelauflieger zu schaffen, der es ermöglicht, daß mit Ausnahme des Lademoduls alle übrigen Komponenten (Schwanenhals, Kupplungselemente und Hinterachsgruppe) des Sattelzuges in Verbindung mit einem anderen Lademodul anderweitige Transportaufgaben wahrnehmen können, so daß der Sattelzug wirtschaftlicher genutzt werden kann. Die Erfindung sieht eine Kupplungsverbindung vor, die es ermöglicht, daß die Kupplung zwischen Schwanenhals und Lademodul einerseits sowie zwischen Lademodul und Hinterachsbaugruppe andererseits jeweils ohne separaten Kupplungsadapter erfolgt. Als Lademodul wird dabei entweder ein frei vom Schwanenhals und der Hinterachsbaugruppe getragenes Ladebett oder eine aus einer Vorderachsgruppe und einem Ladebett zusammengesetzte Kombination verstanden. Unter Berücksichtigung aller Vorteile dieser Erfindung ist das hohe Eigengewicht der Transportelemente (Schwanenhals, Ladebett und Kupplungselemente und Fahrwerk) und die erhebliche Länge des Schwertransports vom großem Nachteil. Schwertransporte erfolgen nach diesem Stand der Technik nur auf einem Ladebett, das im vorderen Bereich an einen Schwanenhals angekoppelt sein muß oder das selbst über einen angebauten Schwanenhals verfügt. Die Ladeobjekte, Bagger Krane, Brecher etc. können nicht direkt mit dem Sattelschleppers und der Hinterachsbaugruppe verbunden und transportiert werden. Dazu ist eine spezielle Kupplung erforderlich. Die Hinterachsgruppe kann nur über die spezielle Kupplung und den Schwanenhals direkt mit der Zugmaschine verbunden werden. Das Ankuppeln der Hinterachsgruppe über eine Zuggabel an einen Sattelschlepper oder eine andere Zugmaschine ist nicht möglich. Die Hinterachsgruppe ist nicht als Ladefläche benutzbar, da sie keine Befestigungselemente für Ladeobjekte aufweist.

Es war deshalb Aufgabe der Erfindung, einen kombinierten Auflieger für den Transport schwerer Ladeobjekte wie Shredder, Baumaschinen, Krane, Bagger, Raupen und dergleichen zu schaffen, der ohne zusätzliche Hebezeuge und Auffahrhilfen sowie mit einfachstem Verlade- und Transportaufwand zu handhaben ist und der auch mit bekannten Kopplungssystemen verschiedenster Art für Schwertransporte verwendbar ist.

Erfindungsgemäß wird die Aufgabe durch die kennzeichnenden Merkmale des Anspruchs 1 gelöst.

Der erfindungsgemäße kombinierte Auflieger nach Anspruch 1 besteht aus einem erfindungsgemäßen Lenkteil und einer erfinfungsgemäßen Hinterachsgruppe, die zusammen mit einem Ladeobjekt oder bedarfsweise mit einem Kopplungssystem und einem starren oder ausziehbaren Ladebett einen kombinierten Auflieger bilden. Ein besonderer Vorzug des kombinierten Aufliegers besteht darin, daß das Lenkteil und die Hinterachsgruppe bedarfsweise mit den verschiedensten Ladeobjekten direkt lösbar verbunden und überbrückt werden können, wodurch komplizierte Kopplungssysteme und Ladebetten entfallen können und sich der Kosten- und Zeitaufwand für das Be- und Entladen minimiert. Außerdem kann zusätzliche Hebetechnik eingespart werden, weil das Ladeobjekt nach Montage an dem Lenkteil und der Hinterachsgruppe durch die in dem Sattelschlepper oder einer anderen Zugmaschine und der Hinterachsgruppe angeordneten herkömmlichen Luftfederungen für den Transport zu kuppeln und anzuheben und nach dem Transport wieder abzusenken ist. Durch die Einsparung des Ladebetts und des Schwanenhalses ist außerdem das Gesamtgewicht eines solchen Schwertransports erheblich reduzierbar.

Vorteilhaft ist es auch, daß erforderlichenfalls das Lenkteil zu einem festen oder absenkbaren Schwanenhals komplettierbar ist, das ebenso wie die Hinterachsgruppe mit den verschiedensten Kopplungssystemen ausgestattet werden kann, die auch über ein starres oder ausziehbares Ladebett einen kombinierten Auflieger bilden können, der den Transport von schweren Maschinen, Geräten und Anlagen in jeder gewünschten Weise ermöglicht. Die Kombination des, zu einem festen oder mechanisch absenkbaren Schwanenhals komplettierten, Lenkteils zu einem Plattformsattelauflieger oder mit einem Standardauflieger sind weitere Anwendungsmöglichkeiten. Besonders hervorzuheben ist es, daß nach der Entladung eines Ladeobjekts die Hinterachsgruppe auch über eine Zuggabel direkt an die Anhängekupplung des Sattelschleppers oder einer anderen beliebigen Zugmaschine oder an das zu einem Schwanenhals komplettierte Lenkteil angekoppelt und nachgezogen werden kann. Der konstruktive Aufbau der Hinterachsgruppe nach Anspruch 2 gestattet neben den bereits erwähnten Vorteilen auch deren Benutzung als schwer belastbarer Hänger.

Das erfindungsgemäße Lenkteil gemäß Anspruch 3 ermöglicht nicht nur die direkte Befestigung eines Ladeobjekts. Mit Hilfe des Drehtellers, des Rastelements und des Kupplungsanschlusses sowie der eigenen Lenkung ist das erfindungsgemäße Lenkteil auf jedem Sattelschlepper nutzbar. Der konstruktive Aufbau des Lenkteils, nach den Ansprüchen 4 und 5, gestattet die Anordnung der Lenkung und darüber hinaus eine lösbare Komplettierung zu einem festen oder mechanisch absenkbaren Schwanenehals und dessen Kombination mit vielen bekannten Kopplungssystemen gemäß Anspruch 6, wie Steckleisten, Adaptern oder Hakenkupplungen mit oder ohne Ladebett oder über eine Zuggabel.

Schließlich stellen die Hinterachsgruppe nach Anspruch 2 und das erfindungsgemäße Lenkteil nach Anspruch 3 gemeinsam mit bekannten Kopplungssystemen oder direkt mit den Ladeobjekten einen kombinierten Auflieger zur Verfügung, der den bisherigen Standardausführungen und Sonderanfertigungen durch seine vielseitige Anwendbarkeit und Kombinationsfähigkeit in jeder Hinsicht überlegen ist und der bedingt dadurch zu hohen Kosteneinsparungen bei Schwerlasttransporten führt.

Die Erfindung soll nachstehend anhand von Ausführungsbeispielen näher beschrieben werden. Dabei zeigen die Zeichnungen in
- Fig. 1: eine Seitenansicht des Lenkteils mit Rahmenkopf und Lenkung,
- Fig. 2: eine Draufsicht von Fig.1,
- Fig. 3: eine perspektivische Darstellung von Fig.1 und Fig.2,
- Fig. 4: eine Seitenansicht der Hinterachsgruppe mit Zuggabel,
- Fig. 5: eine Draufsicht von Fig.4,
- Fig. 6: eine Rückansicht von Fig.4
- Fig. 7: eine perspektivische Darstellung von Fig.4 und Fig.5,
- Fig. 8: ein Anwendungsbeispiel mit direkter Befestigung des Ladeobjekts an dem Lenkteil und der Hinterachsgruppe,
- Fig. 9: ein Anwendungsbeispiel mit komplettierten Schwanenhals und einem Kopplungssystem mit Adapter und Ladebett,
- Fig. 10: ein Anwendungsbeispiel mit komplettierten Schwanenhals und einem Kopplungssystem mit Adapter ohne Ladebett,
- Fig. 11: ein Anwendungsbeispiel mit Zuggabel an der Hinterachsgruppe und direkter Ankopplung an der Anhängekupplung einer Zugmaschine,
- Fig. 12: ein Anwendungsbeispiel mit einem, zu einem starren Schwanenhals komplettierten Lenkteil mit angeordneter Steckleiste,
- Fig. 13: ein Anwendungsbeispiel mit einem, zu einem mechanisch absenkbaren Schwanenhals komplettierten Lenkteil,

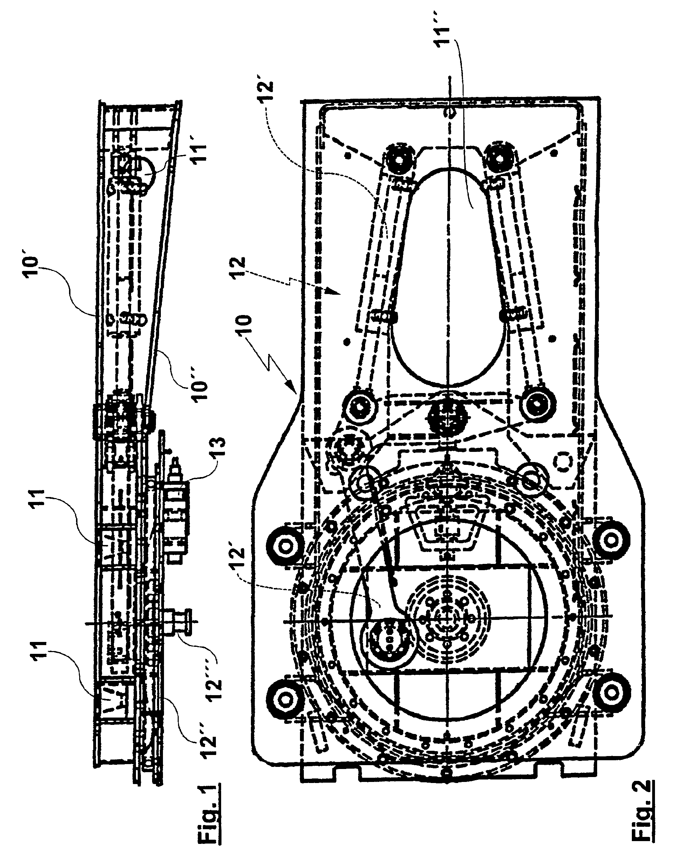

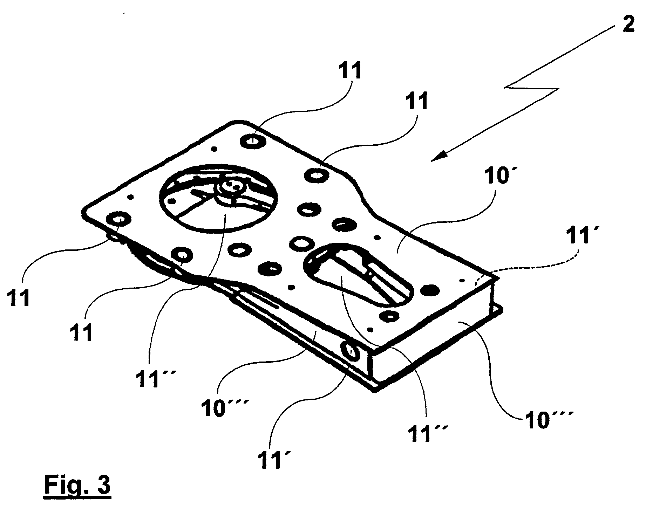

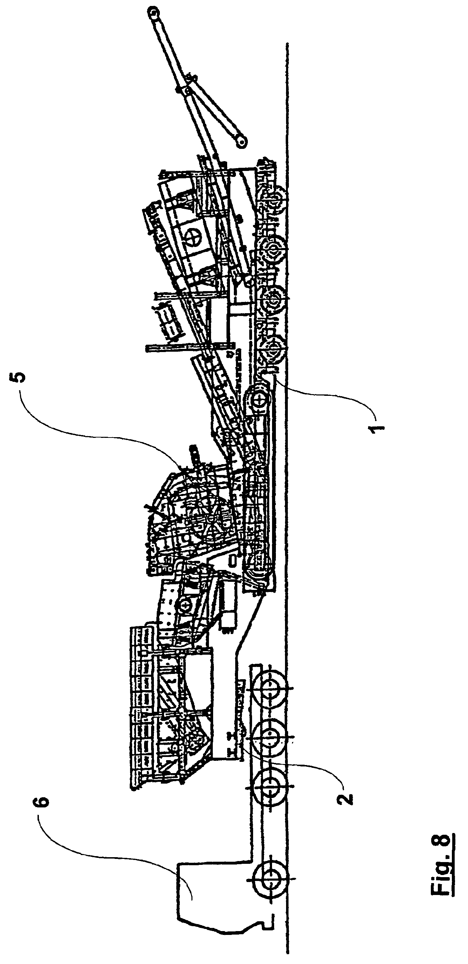

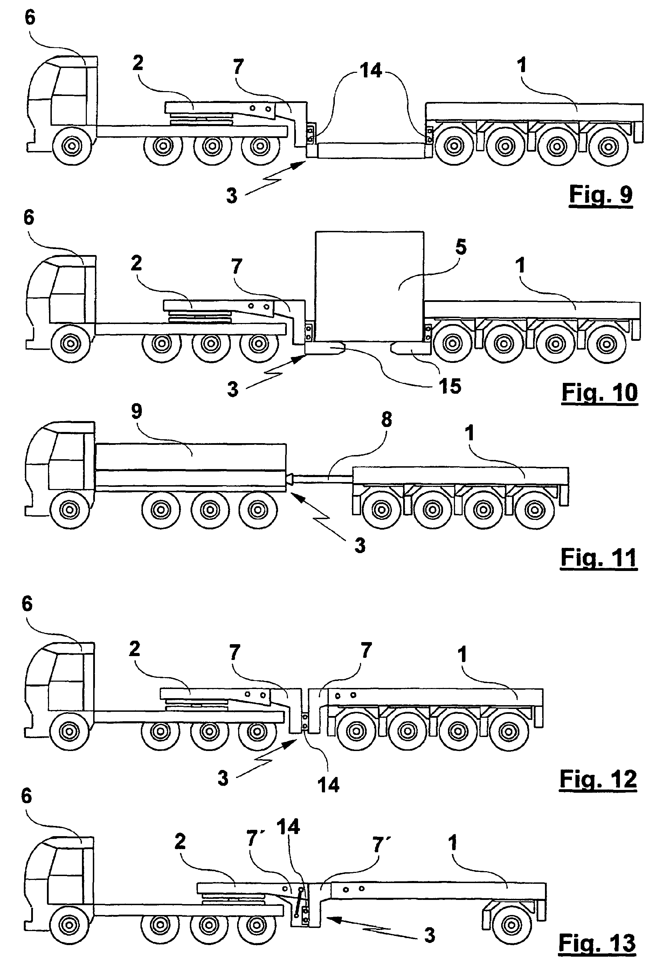

Die Fig.1 bis Fig.3 zeigen die Seitenansicht, die Draufsicht und die perspektivische Darstellung eines erfindungsgemäßen Lenkteils 2. Das Lenkteil 2 ist vorzugsweise aus einem stabilen Rahmenkopf 10 geferigt, mit einer Deckfläche 10' und einer Bodenfläche 10" gefertigt, die deckungsgleich übereinander durch Seitenflächen 10'" verbunden sind und einen Hohlraum bilden. Die Deckfläche 10' und die Bodenfläche 10" sind von mehreren Aufnahmen 11 und Montageöffnungen 11" in vertikaler Richtung durchdrungen, während Aufnahmen 11' die Seitenflächen 10"' in horizontaler Richtung durchdringen. Zwischen der Deckfläche 10' und der Bodenfläche 10" sind die Lenkungselemente 12' beweglich an den Aufnahmen 11 der Deckfläche 10' und der Bodenfläche 10" angeordnet. Die Lenkungselemente 12' sind mit dem, unter der Bodenfläche 10" angeordneten, Drehteller 12" beweglich verbunden und übertragen die Lenkbewegungen der Lenkung 12 auf diesen und umgekehrt. Das mittig an dem Drehteller 12" angeordnete Rastelement 12'" ermöglicht die Arretierung des Lenkteils 2 an jedem Sattelschlepper 6. Der ebenfalls unter dem Drehteller 12" angeordnete Lenkkeil 13 gestattet die Kupplung des Lenkteils 2 mit dem Sattelschlepper 6. An den Aufnahmen 11 der Deckfläche 10' können bedarfsweise Teile eines Ladeobjekts 5, beispielsweise das eine Ende eines Shredders, nach Fig.8, kraftschlüssig und lösbar angeordnet sein. Die horizontalen Aufnahmen 11' in den Seitenflächen 10'" dienen zur direkten Aufnahme von Kopplungselementen 3 wie beispielsweise eines festen oder absenkbaren Schwanenhalses 7 oder 7' gemäß Fig. 12 und Fig.13 komplettiert mit Steckleisten 14.

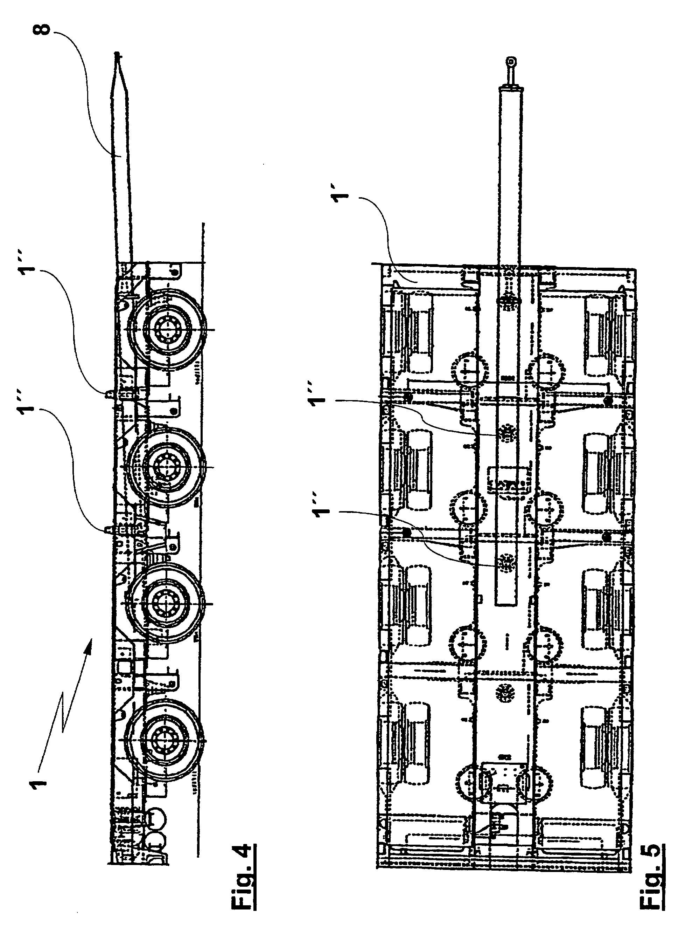

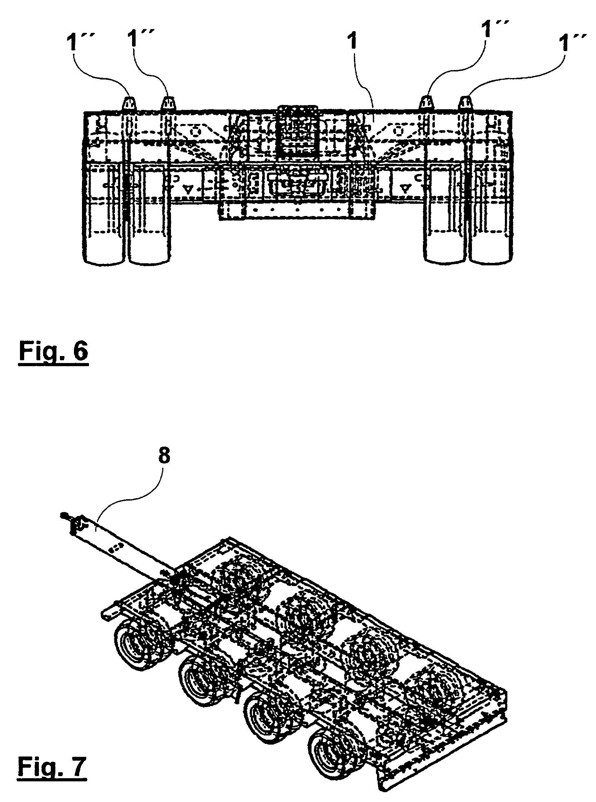

Die Fig.4 bis Fig.7 zeigen eine erfindungsgemäße Hinterachsgruppe 1, mit einem Rahmenkopf 1' und Arretierungselementen 1 ", der beispielsweise mit einer Zuggabel 8 ausgerüstet ist, mit der die Hinterachsgruppe 1, gemäß Fig.11 direkt an die Anhängekupplung des Sattelschleppers 6 oder einer beliebigen Zugmaschine 9 gehangen und von diesen nachgezogen werden kann. Mit Hilfe der Arretierungselemente 1" werden beispielsweise Teile eines Ladeobjektes 5, beispielsweise das dem Lenkteil 2 gegenüberliegende Ende eines Shredders, gemäß Fig.8, kraftschlüssig und lösbar befestigt. Außerdem kann der Rahmenkopf 1' mit Kopplungssystemen (3) wie Steckleisten 14 gemäß Fig.12 oder mit Adaptern 15 mit Ladebett 4 gemäß Fig.9 und ohne Ladebett 4 gemäß Fig.10 ausgestattet werden.

### Aufstellung der verwendeten Bezugszeichen

- 1: Hinterachsgruppe,
- 1': Rahmenkopf,
- 1": Arretierungselemente,
- 2: Lenkteil,
- 3: Kopplungssysteme,
- 4: starres oder ausziehbares Ladebett,
- 5: Ladeobjekt,
- 6: Sattelschlepper,
- 7: zu einem starren Schwanenhals komplettiertes Lenkteil,
- 7': zu einem absenkbaren Schwanenhals komplettiertes Lenkteil,
- 8: Zuggabel,
- 9: Zugmaschine
- 10: Rahmenkopf,
- 10': Deckfläche des Rahmenkopfes,
- 10": Bodenfläche des Rahmenkopfes,
- 10'": Seitenflächen des Rahmenkopfes,
- 11: vertikale Aufnahmen,
- 11': horizontale Aufnahmen,
- 11": Montageöffnungen,
- 12: Lenkung,
- 12': Lenkungselemente,
- 12": Drehteller,
- 12'": Rastelemente,
- 13: Lenkungskeil,
- 14: Steckleiste,
- 15: Adapter

## Patentansprüche

1. Kombinierter Auflieger zum Transport schwerer Ladeobjekte wie Shredder, Baumaschinen, Krane Bagger, Raupen und dergleichen, bestehend aus einem Sattelschlepper (6), einem Ladeobjekt (5) und einer Hinterachsgruppe (1) mit Kopplungssystemen (3) und Luftfederungen, **dadurch gekennzeichnet, daß** das Ladeobjekt (5) einerseits mit der Hinterachsgruppe (1) und andererseits mit einem auf den Sattelschlepper (6) aufsetzbaren Lenkteil (2) direkt und lösbar verbunden ist, wobei das Ladeobjekt (5) mit den Luftfederungen der Hinterachsgruppe (1) und denen des Sattelschleppers (6) direkt zu kuppeln, anzuheben und abzusenken ist.
- daß das Lenkteil (2) zu einem starren oder mechanisch absenkbaren Schwanenhals (7, 7') komplettierbar ist und mit verschiedenen Kopplungssystemen (3) allein, oder in Verbindung mit einem starren oder ausziehbaren Ladebett (4) mit der Hinterachsgruppe (1) oder mit einem Standardauflieger universell kombinierbar ist,
- daß die Hinterachsgruppe (1) über eine Zuggabel (8) direkt an eine Anhängekupplung koppelbar und mit dem Sattelschlepper (6) oder einer anderen Zugmaschine (9) nachziehbar ist.

2. Kombinierter Auflieger nach Anspruch 1, **dadurch gekennzeichnet, daß** die Hinterachsgruppe (1) einen Rahmenkopf (1') und Arretierungselemente (1") zum Auf- oder Einsetzen und Befestigen von Ladeobjekten (5), Kopplungssystemen (3) und einer Zuggabel (8) aufweist.

3. Kombinierter Auflieger nach Anspruch 2, **dadurch gekennzeichnet, daß** das Lenkteil (2) aus einem Rahmenkopf (10) mit einer Deckfläche (10'), einer Bodenfläche (10"), mit Seitenflächen (10"') mit diese vertikal und horizontal durchdringenden Aufnahmen (11, 11') sowie Montageöffnungen (11"), einer Lenkung (12) mit Lenkungselementen (12'), einem Drehteller (12"), einem Rastelement (12"') und einem Lenkkeil (13) besteht.

4. Kombinierter Auflieger nach Anspruch 3, **dadurch gekennzeichnet, daß** die vertikalen Aufnahmen (11') des Rahmenkopfes (10) für die Anordnung der Lenkung (12), die Befestigung eines Ladeobjektes (5) oder von Kopplungssystemen (3) und die horizontalen Aufnahmen (11") für die lösbare Komplettierung des Lenkteils (2) zu dem starren oder mechanisch absenkbaren Schwanenhals (7, 7`) und die Montageöffnungen (11'") als Zugangswege zu den Lenkungselementen (12`) angeordnet sind.

5. Kombinierter Auflieger nach Anspruch 3, **dadurch gekennzeichnet, daß** die Lenkungselemente (12') der Lenkung (12) zwischen der Deckfläche (10') und der Bodenfläche (10") des Rahmenkopfes (10) an den vertikalen Aufnahmen (11') beweglich angeordnet und mit dem Drehteller (12") beweglich verbunden sind und daß an dem Drehteller (12") das vertikale Rastelement (12'") und der Lenkkeil (13) angeordnet ist, mit denen das Lenkteil (2) auf dem Sattelschlepper (6) arretierbar sowie an diesen kuppelbar ist.

6. Kombinierter Auflieger nach Anspruch 1, **dadurch gekennzeichnet, daß** die Kopplungssysteme (3) die Zuggabel (8), Steckleisten (14), Adapter (15), eine Hakenkupplung oder dergleichen sind, die an dem Lenkteil (2) und/oder der Hinterachsgruppe (1) oder an dem zu einem starren oder mechanisch absenkbaren Schwanenhals (7, 7') komplettierten Lenkteil (2) und/oder der Hinterachsgruppe (1) angeordnet sind und daß an dem starren oder mechanisch absenkbaren Schwanenhals (7, 7') und/oder an der Hinterachsgruppe (1) auch das starre oder ausziehbare Ladebett (4) oder das Ladeobjekt (5) selbst über die Adapter (15) beidseitig aufnehmbar sind.

## Claims

1. Combined semi trailer for transporting heavy loads such as shredders, construction machinery, cranes, excavators, caterpillars, etc. consisting of a semi trailer tractor (6), a loaded object (5), and a rear axle group (1) with coupling systems (2) and air suspension, **characterized in that** the loaded object (5) is directly and releasably connected to the rear axle group (1) and to an coupling (2) that can be placed on the semi trailer truck (6), whereby the load object (5) can be directly coupled, lifted and lowered with the air suspension of the rear axle group (1) and of the semi trailer truck (6).
- the coupling (2) can be completed with a fixed or mechanically lowerable gooseneck (7, 7') and is universally combinable with the rear axle group (1) or a standard trailer with different coupling systems (3) by itself or in connection with a fixed or withdrawable load bed (4).
- the rear axle group (1) can be directly coupled to a trailer coupling with a hitch (8) and can be towed with the semi trailer truck (6) or other type of truck (9).

2. Combined semi trailer according to claim 1, **characterized in that** the rear axle group (1) has a frame front end (1') and locking elements (1") for mounting or inserting and affixing load objects (5), coupling systems (3), and a hitch (8).

3. Combined semi trailer according to claim 2, **characterized in that** the coupling (2) consists of a frame front end (10) with a top (10'), a bottom (10") with sides (10"') that have holes (11, 11') that vertically and horizontally penetrate the sides, as well as mounting openings (11"), a steering assembly (12) with steering elements (12'), a turntable (12"), a lock element (12"'), and a steering wedge (13).

4. Combined semi trailer according to claim 3, **characterized in that** the vertical seats (11') of the frame front end (10) for mounting the steering assembly (12), affixing a load object (5) or coupling systems (3), and the horizontal seats (11") for the releasable completion of the coupling (2) to the fixed or mechanically lowerable gooseneck (7, 7') and the mounting openings (11'") are access paths to the steering elements (12').

5. Combined semi trailer according to claim 3, **characterized in that** the steering elements (12') of the steering assembly (12) are situated between the top (10') and the bottom (10") of the frame front end (10) on the vertical seats (11') and connected to the turntable (12"), and that the vertical lock element (12"') and the steering wedge (13) mounted on the turntable (12") can lock and couple the coupling (2) to the semi trailer tractor (6).

6. Combined semi trailer according to claim 1, **characterized in that** the coupling systems (3), the hitch (8), male multi-point connector (14), adapter (15), hook coupling, etc. that are on the coupling (2) and/or the rear axle group (1) or on the coupling (2) completed with a fixed and/or mechanically lowerable gooseneck (7, 7') and/or the rear axle group (1), and that the fixed or withdrawable load bed (4) or the load object (5) can be received on both sides by the adapter (15) on the fixed or mechanically lowerable gooseneck (7, 7') and/or the rear axle group (1).

## Revendications

1. Semi-remorque combinée destinée à transporter des objets de charge lourds, tels que shredders, machines de chantier, grues, excavateurs, tracteurs à chenilles et semblable, se composant d'un tracteur de semi-remorque (6), d'un objet de charge (5) et d'un groupe d'essieux arrière (1) avec des systèmes de couplage (3) et des suspensions pneumatiques, **caractérisée par le fait que** l'objet de charge (5) est relié de manière directe et amovible d'un côté au groupe d'essieux arrière (1) et de l'autre côté à une partie de direction (2) qui peut être rapportée sur le tracteur de semi-remorque (6), ledit objet de charge (5) étant à coupler directement aux suspensions pneumatiques du groupe d'essieux arrière (1) et à celles du tracteur de semi-remorque (6), étant à lever et à abaisser,
- que la partie de direction (2) peut être complétée de manière à obtenir un col de cygne (7, 7') rigide ou pouvant être abaissé mécaniquement, et peut être combinée de manière universelle avec des systèmes différents de couplage (3) seuls ou - en combinaison avec un plateau de chargement (4) rigide ou extensible - avec le groupe d'essieux arrière (1) ou avec une semi-remorque standard,
- que le groupe d'essieux arrière (1) peut être couplé par le biais d'une fourche de remorque (8) directement à un attelage de remorque et peut être traîné au moyen du tracteur de semi-remorque (6) ou d'un autre tracteur (9).

2. Semi-remorque combinée selon la revendication 1, **caractérisée par le fait que** le groupe d'essieux arrière (1) présente une tête de châssis (1') et des éléments d'arrêt (1") pour rapporter ou implanter et fixer des objets de charge (5), des systèmes de couplage (3) et une fourche de remorque (8).

3. Semi-remorque combinée selon la revendication 2, **caractérisée par le fait que** la partie de direction (2) se compose d'une tête de châssis (10) avec une surface supérieure (10'), une surface de base (10"), avec des surfaces latérales (10"') présentant des logements (11, 11') pénétrant celles-ci verticalement et horizontalement et des ouvertures de montage (11 "), d'une direction (12) comprenant des éléments de direction (12'), un plateau tournant (12"), un élément à encliquetage (12"'), ainsi que d'un coin de guidage (13).

4. Semi-remorque combinée selon la revendication 3, **caractérisée par le fait que** les logements verticaux (11) de la tête de châssis (10) sont disposés pour la disposition de la direction (12), pour la fixation d'un objet de charge (5) ou de systèmes de couplage (3), et que les logements horizontaux (11') sont disposés pour compléter d'une manière amovible la partie de direction (2) pour obtenir le col de cygne (7, 7') rigide ou pouvant être abaissé mécaniquement, et que les ouvertures de montage (11") sont disposées en tant que voies d'accès aux éléments de direction (12').

5. Semi-remorque combinée selon la revendication 3, **caractérisée par le fait que** les éléments de direction (12') de la direction (12) sont disposés de manière mobile entre la surface supérieure (10') et la surface de base (10") de la tête de châssis (10) sur les logements verticaux (11') et sont reliés de manière mobile au plateau tournant (12"), et que sur ledit plateau tournant (12") sont disposés l'élément vertical à encliquetage (12"') et le coin de guidage (13) au moyen desquels la partie de direction (2) peut être arrêtée sur le tracteur de semi-remorque (6) et peut être couplée sur celui-ci.

6. Semi-remorque combinée selon la revendication 1, **caractérisée par le fait que** les systèmes de couplage (3) sont la fourche de remorque (8), des listeaux à trous (14), des adaptateurs (15), un crochet d'attelage ou semblable, qui sont disposés sur la partie de direction (2) et/ou sur le groupe d'essieux arrière (1) ou sur la partie de direction (2) qui peut être complétée de manière à obtenir un col de cygne (7, 7') rigide ou pouvant être abaissé mécaniquement, et/ou sur le groupe d'essieux arrière (1), et que le plateau de chargement (4) rigide ou extensible ou l'objet de charge (5) même peuvent être reçus, eux aussi, de part et d'autre par le biais des adaptateurs (15) sur le col de cygne (7, 7') rigide ou pouvant être abaissé mécaniquement et/ou sur le groupe d'essieux arrière (1).
